# EUROPEAN PATENT APPLICATION

(11) **EP 4 826 524 A1**
(43) Date of publication of application: **21.10.2026**
(21) Application number: 23961599.0
(22) Date of filing: 13.12.2023
(51) Int. Cl.: G06F 8/65, B66B 1/34, G06F 13/38, G06F 11/30, G06F 21/44, H04L 69/18

(54) **ELEVATOR MAINTENANCE DEVICE**

(71) Applicant: Hyundai Elevator Co., Ltd., Chungju-si, Chungcheongbuk-do 27329 (KR)
(72) Inventor: KUM, In Soo, Chungju-si, Chungcheongbuk-do 27329 (KR); JO, Choong Jae, Chungju-si, Chungcheongbuk-do 27329 (KR); JO, Yeong Jae, Chungju-si, Chungcheongbuk-do 27329 (KR)
(74) Representative: Splanemann
(86) International application number: PCT/KR2023/020564
(87) International publication number: WO 2025/127198

(57) **Abstract**

This universal update device comprises: a storage for storing a program that is to update a target device, and at least one communication protocol used in the target device; a first connector connected to a connector of the target device through a cable, the first connector including a plurality of connection elements, the plurality of connection elements including a first connection element group connected to a first interface of the target device and a second connection element group connected to a second interface, which is different from the first interface, of the target device; and a controller for periodically scanning the first connector, the controller receiving, in response to detecting that the first connector is connected to the first or second interface, a communication protocol of the connected first or second interface and information of a microcontroller unit that corresponds to the connected first or second interface, and updating the microcontroller unit on the basis of the received communication protocol and information.

## Description

### [Technical Field]

The present disclosure relates to an elevator maintenance device.

### [Background Art]

In order to update a program of an elevator system (e.g., a control panel) that controls operation of an elevator car, (1) a program for performing the update is delivered to a field technician of an elevator manufacturer or a maintenance company via email or the like within, (2) the field technician stores the program in an update device, and (3) the field technician visits a site and connects the update device to the control panel to update the program of the control panel.

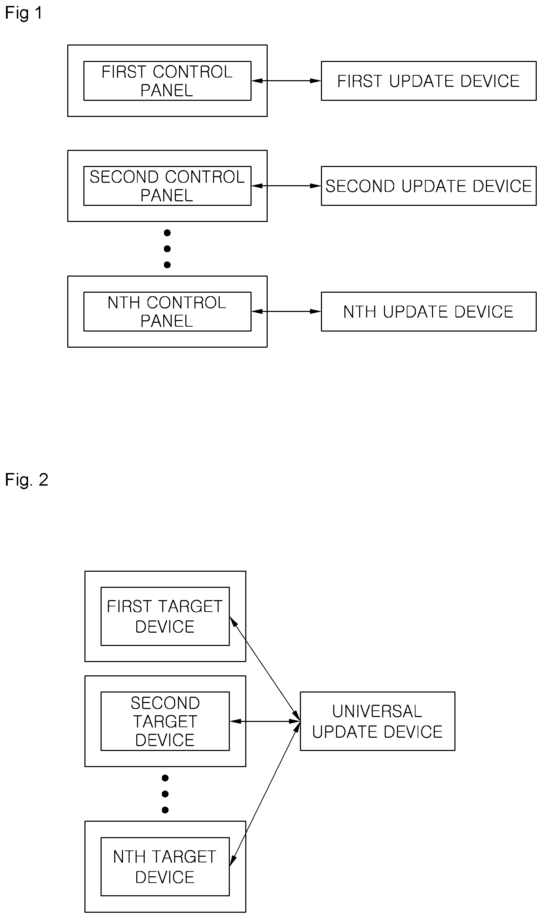

FIG. 1 is a block diagram illustrating a method of updating a program of a control panel of a conventional elevator. Referring to FIG. 1, each of a plurality of control panels may use a printed circuit board (PCB) having a different specification. For example, each control panel may have a different interface, connector, and protocols. In one example, not only the control panel but also an inverter for driving the elevator, a door inverter, and the like may use printed circuit boards (PCBs) having different specifications.

In order to update programs of PCBs having different specifications, update devices corresponding to respective specification should be used. Accordingly, there is a problem in that a plurality of update devices should be provided. In addition, an update program should be stored in each update device, and the update device storing the update program should be transported to a site where the control panel is located. In addition, sharing the program for performing the update via email may pose security issues.

### RELATED LITERATURE

### Patent Document

Korean Patent Registration No. 10-0346282
Korean Patent Registration No. 10-2230118
Korean Patent Laid-open Publication No. 10-2001-0009830
Korean Patent Laid-open Publication No. 10-2018-0005690

### [Disclosure]

### [Technical Problem]

The present disclosure provides an elevator maintenance device capable of supporting various boards constituting a control panel, for example, a universal update device.

### [Technical Solution]

In accordance with one aspect of the present disclosure, a universal update device includes: a storage configured to store a program for updating a target device and at least one communication protocol used by the target device; a first connector configured to be connected to a connector of the target device via a cable, the first connector including a plurality of connection elements, the plurality of connection elements including a first connection element group configured to be connected to a first interface of the target device and a second connection element group configured to be connected to a second interface of the target device different from the first interface, the first connection element group and the second connection element group sharing at least one connection element; and a controller configured to periodically scan the first connector, wherein the controller is configured to, in response to detecting that the first connector is connected to the first interface or the second interface, receive a communication protocol of the connected first or second interface and information of a microcontroller unit corresponding to the connected first or second interface, and update the microcontroller unit based on the received communication protocol and the information.

In one embodiment, the universal update device may further include a second connector configured to be connected to a connector interface different from the first and second interfaces, wherein the controller is configured to periodically scan the second connector while periodically scanning the first connector, in response to detecting that the second connector is connected to the connector interface, receive a communication protocol of the connected connector interface and information of a microcontroller unit corresponding to the connected connector interface, and update the microcontroller unit based on the received communication protocol and the information.

In one embodiment, the plurality of connection elements may further include a third connection element group, and the third connection element group may not share any connection element with the first and second connection element groups.

In one embodiment, the third connection element group may be configured to monitor the target device and configure the target device.

In one embodiment, the third connection element group may be configured to connect to the target device, receive authentication information of the target device, and determine whether the target device is a valid terminal.

In one embodiment, the controller may be configured to: update a microcontroller unit corresponding to the first interface in response to the first connection element group being connected to the first interface; and update a microcontroller unit corresponding to the interface in response to the third connection element group being connected to the corresponding interface.

In one embodiment, the first connection element group and the second connection element group may be connection elements for using different protocols from each other.

In one embodiment, the first connection element group and the second connection element group may be connection elements for using the same protocol.

In one embodiment, the controller may be configured to: update a microcontroller unit corresponding to the first interface in response to the first connection element group being connected to the first interface; and update a microcontroller unit corresponding to the second interface in response to the second connection element group being connected to the second interface.

In accordance with one aspect of the present disclosure, a method of updating a microcontroller unit included in a target device, the method including: periodically scanning, by a controller, a first connector of the update device, the first connector including a plurality of connection elements, the plurality of connection elements including a first connection element group configured to be connected to a first interface of a target device and a second connection element group configured to be connected to a second interface of the target device different from the first interface, the first connection element group and the second connection element group sharing at least one connection element; detecting, by the controller, that the first connection element group is electrically connected to the first interface; stopping, by the controller, scanning of the first connection element group in response to the detecting; continuously performing, by the controller, scanning of the second connection element group; and updating, by the controller, a microcontroller unit corresponding to the first interface through the first connection element group.

In one embodiment, the method may further include: detecting, by the controller, that the second connection element group is electrically connected to the second interface after the continuously performing of the scanning of the second connection element group; stopping, by the controller, scanning of the second connection element group in response to the detecting; and updating, by the controller, a microcontroller unit corresponding to the second interface through the second connection element group.

In one embodiment, the updating of the microcontroller unit corresponding to the first interface may include: receiving a communication protocol of the first interface and information of the microcontroller unit through the first interface; and automatically updating the microcontroller unit based on the communication protocol and the information.

In accordance with one aspect of the present disclosure, a method of updating a microcontroller unit included in a target device, the method including: periodically scanning, by a controller, a first connector of the update device, the first connector including a plurality of connection elements, the plurality of connection elements including a first connection element group configured to be connected to a first interface of a target device and a second connection element group configured to be connected to a second interface of the target device different from the first interface, the first connection element group and the second connection element group sharing at least one connection element; detecting, by the controller, that the first connection element group is electrically connected to the first interface; stopping, by the controller, scanning of the first connection element group in response to the detecting; continuously performing, by the controller, scanning of the second connection element group; and providing, by the controller, a user interface that allows monitoring of the target device and configuration of the target device through the first connection element group.

In one embodiment, the method may further include: detecting, by the controller, that the second connection element group is electrically connected to the second interface after the continuously performing of the scanning of the second connection element group; stopping, by the controller, scanning of the second connection element group in response to the detecting; and updating, by the controller, a microcontroller unit corresponding to the second interface through the second connection element group.

### [Advantageous Effects]

User convenience can be improved by connecting to various boards of a control panel with a single update device and updating programs.

By updating the program of the control panel based on a cloud, it is possible to manage a log history and enhance file security.

Since updates can be performed using a single device instead of a plurality of various devices, resource utilization efficiency can be improved, thereby reducing raw material consumption and reducing waste generation. Accordingly, it is possible to contribute to reducing carbon emissions.

### [Description of Drawings]

FIG. 1 is a block diagram illustrating a method of updating a program of a control panel of a conventional elevator.
FIG. 2 is a block diagram illustrating a method of updating a program of a target device according to an embodiment of the present disclosure.
FIG. 3 is a block diagram of an update device according to an embodiment of the present disclosure.
FIG. 4 is a schematic diagram of a pin arrangement of a connector according to an embodiment of the present disclosure.
FIGS. 5A, 6A, 7A, 8A, 9A, and 10A illustrate concepts of connection between a connector and a target device according to an embodiment of the present disclosure.
FIGS. 5B, 6B, 7B, 8B, 9B, and 10B illustrate examples of signals applied to connection elements of a connector according to an embodiment of the present disclosure.
FIGS. 5C to 5D, 6C, 7C, 8C to 8F, 9C to 9D, and 10C illustrate examples of signals applied to connection elements of a connector of a target device according to an embodiment of the present disclosure.
FIG. 11 is an example of a flowchart of a method of updating a program of a target device using an update device according to an embodiment of the present disclosure.

### [Mode of Invention]

Hereinafter, exemplary embodiments of the present disclosure will be described in detail with reference to the accompanying drawings such that the present disclosure may be easily implemented by those skilled in the art. However, the present disclosure may be implemented in various different forms and is not limited to the embodiments described herein.

In addition, in the drawings, portions irrelevant to the description will be omitted for clearly explaining the present disclosure and like components will be denoted by like reference numerals throughout the specification.

Throughout this specification, when a certain part "includes" a certain component, it means that another component may be further included not excluding another component unless otherwise defined.

It should be understood that the technology described in this disclosure is not intended to be limited to particular embodiments, and includes various modifications, equivalents and/or alternatives to the embodiments of the present disclosure.

As used in this disclosure, the expression "configured (or set up) to" may be used interchangeably with, for example, "suitable for," "having the capacity to," "designed to," "adapted to," "made to," or "capable of," depending on the context. The expression "configured (or set up) to" may not necessarily mean "specifically designed (hardware wise) to". Instead, in a certain context, the expression "a device configured to" may mean that the device is "capable of" doing something in conjunction with other devices or components.

It will be understood that the related literature described in this disclosure is incorporated herein by reference in its entirety and that a person having ordinary skill in the art will be able to apply what is described in the related literature to the matter briefly described herein.

FIG. 2 is a block diagram illustrating a method of updating a program of a target device according to an embodiment of the present disclosure. Referring to FIG. 2, a universal update device according to the present disclosure may be connected to each of a plurality of target devices having different standards, and thus it is possible to update the plurality of target devices using a single universal update device. The target device may include, for example, devices requiring program updates, such as a control panel, an inverter for driving an elevator, and a door inverter. Each of the devices requiring program updates, such as the control panel, the inverter for driving the elevator, and the door inverter, may have different interfaces and communication protocols.

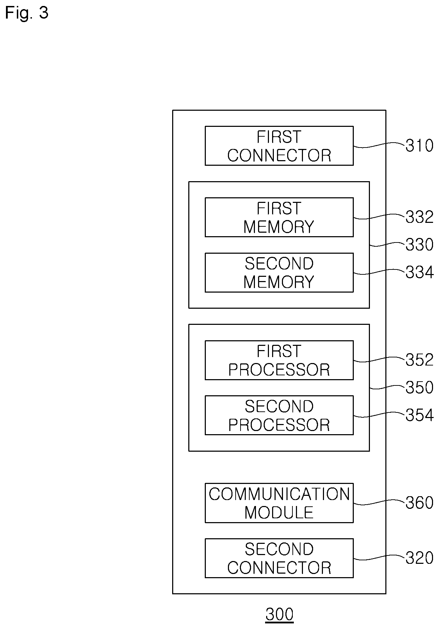

FIG. 3 is a block diagram of an update device 300 according to an embodiment of the present disclosure. Referring to FIG. 3, the update device 300 includes a first connector 310, a second connector 320, a storage 330, a controller 350, and a communication module 360.

The storage 330 is configured to store instructions. When the instructions are executed by the controller 350, the controller 350 may perform a predetermined operation. The storage 330 may be accessed by controller 350 and may include computer-readable storage media, such as data storage devices, that provide persistent storage of data and executable instructions (e.g., software applications, programs, functions, etc.). The storage 330 may include volatile memory and non-volatile memory, fixed and removable media devices, and any suitable memory device or electronic data storage that retains data for access by a computing device. The storage 330 may include random access memory (RAM), read-only memory (ROM), flash memory, and various implementations of other types of storage media having various memory device configurations.

The storage 330 may include a first memory 332 and a second memory 334. The first memory 332 may be configured to store a firmware file in a format supported by a target device. The second memory 334 may be configured as, for example, an external memory, and to store firmware having a larger capacity than that of the first memory 332.

The controller 350 may be configured to control operations of components of the update device 300, for example, the storage 330, the communication module 360, and the first and second connectors 310 and 320. In one embodiment, the controller 350 may include a first processor 352 and a second processor 354 (auxiliary processor). In one embodiment, the first processor 352 may be configured to control an operation of the second connector 320, the storage 330, the communication module 360, and the second processor 354. The first processor 352 may be configured to control the communication module 360 to perform communication with the target device. The second processor 354 may control the operation of the first connector 310 under the control of the first processor 352. The first processor 352 may be configured to control operations of the storage 330, the communication module 360, and the second connector 320.

In one embodiment, the first processor 352 may be electrically connected to the second connector 320. The second processor 354 may be electrically connected to the first connector 310. Depending on a design of the first processor 352, the first processor 352 may not be electrically connected to the first connector 310, and in this case, the update device may further include the second processor 354 that is electrically connected to the first connector 310 and controls the first connector 310.

In another embodiment, the first processor 352 and the second processor 354 may be integrated into a single processor.

In one embodiment, the second processor 354 may be configured not to control operations of the storage 330 and the communication module 360. Only the first processor 352 communicating with an external device may be more efficient than each of a plurality of processors communicating with the external device.

The communication module 360 may include a module for communication with an external device (e.g., a central management server, a cloud server, an external device, etc.). The communication module 360 may be configured such that the update device communicates with an external device or a cloud to receive information. A communication scheme of the communication module 360 may use a network established according to GSM (Global System for Mobile communication), CDMA (Code Division Multiple Access), HSDPA (High Speed Downlink Packet Access), HSUPA (High Speed Uplink Packet Access), LTE (Long Term Evolution), LTE-A (Long Term Evolution-Advanced), WLAN (Wireless LAN), Wi-Fi (Wireless-Fidelity), Wi-Fi (Wireless Fidelity) Direct, DLNA (Digital Living Network Alliance), WiBro (Wireless Broadband), WiMAX (World Interoperability for Microwave Access), and a 5G wireless communication network, or the like, but is not limited thereto and may include all transmission standards to be developed in the future. The communication module 360 may include any configuration capable of transmitting and receiving data via wired and/or wireless communication.

In one embodiment, the communication module 360 may be configured to receive a firmware file and to transmit and receive control information and status information for performing a firmware update of the target device. For example, the communication module 360 may be configured to receive firmware data from an external device such as a central management server or a cloud server, and transmit current firmware information of the update device 300 to the external device.

According to one embodiment, the first connector 310 and the second connector 320 may be configured to automatically recognize an interface, a protocol, and the like used by the target device in response to being connected to the target device.

In one embodiment, the first connector 310 may be configured to be connected to a connector of a target device (not shown). The first connector 310 may be configured to include a plurality of pins. Since the connector of the target device may be configured to have various interfaces, the plurality of pins may have an arrangement capable of being connected to the various interfaces. In one embodiment, a single first connector 310 may have an arrangement configured to connect to target devices having different interfaces. In one embodiment, a single first connector 310 may have an arrangement configured to connect to a plurality of different interfaces of a single target device.

In one embodiment, an interface or a communication protocol connected to the first connector 310 may include JTAG, SWD, ezPORT, UART, CAN, and LCD-MATRIX. An interface connected to the second connector 320 may include a UART.

The first connector 310 may be configured to automatically recognize the target device in response to being connected to the target device via a cable (not shown). In one embodiment, the controller 350 may be configured to periodically scan the first connector 310. For example, the second processor 354 may be configured to periodically scan the first connector 310. In response to the target device being connected to the first connector 310 during the scanning, the second processor 354 may receive information on a type, an interface, a protocol of the target device via the first connector 310. For example, the second processor 354 may receive an ID of a chip installed in the target device or a user ID (UID). In addition, the second processor 354 may receive, from the target device, information on a current program (e.g., firmware, etc.) of the target device (e.g., a version, whether an update is required, etc.). The second processor 354 may update the target device using firmware stored in the update device or firmware stored in an external device based on the type, the interface, and the protocol of the target device and program information currently stored in the update device.

The second connector 320 may be configured to automatically recognize the target device in response to being connected to the target device via a cable (not shown). The second connector 320 may be configured to be connected to a UART interface of the target device. In one embodiment, the controller 350 may be configured to periodically scan the second connector 320. For example, the first processor 352 may be configured to periodically scan the second connector 320. In response to the target device being connected to the second connector 320 during the scanning, the first processor 352 may receive information on the type, the interface, the protocol of the target device via the second connector 320. For example, the first processor 352 may receive an ID (e.g., a product ID) of a chip installed in the target device or a user ID (UID). In addition, the first processor 352 may receive information on a current program (e.g., firmware, etc.) of the target device from the target device. The first processor 352 may update the target device using firmware stored in the update device or firmware stored in an external device, based on the type, the interface, the protocol of the target device and program information currently stored in the update device.

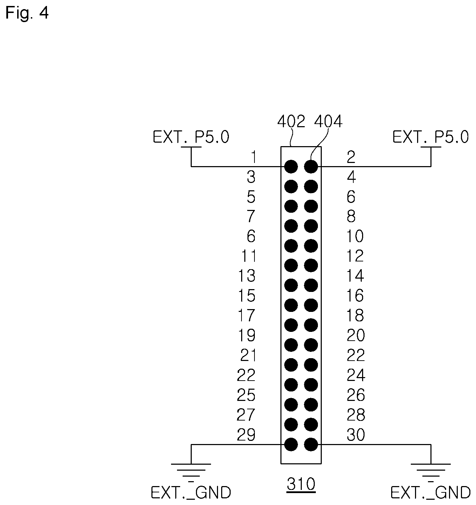

FIG. 4 is a schematic diagram of a pin arrangement of the connector 310 according to an embodiment of the present disclosure. Although FIG. 4 illustrates that the first connector 310 has 30 pins, it will be understood that the number of pins of the first connector 310 is merely exemplary, and the number of pins may be variously modified. It will also be understood that the pins of the first connector 310 may be replaced with pin holes into which pins are insertable. Accordingly, the pins of the first connector 310 may be referred to as connection elements. Referring to FIG. 4, the first connector 310 includes a housing 402 and connection elements 404. A plurality of connection elements (e.g., pins or pin holes) are disposed within the housing 402. The housing is attached to a substrate (not shown) of the update device 300. It will be understood that reference numerals are assigned to the connection elements for purposes of description in FIG. 4.

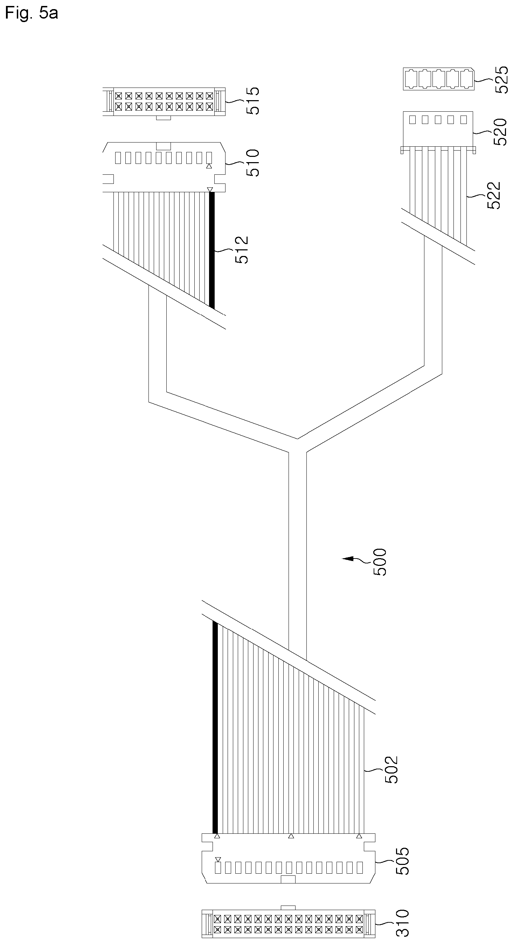

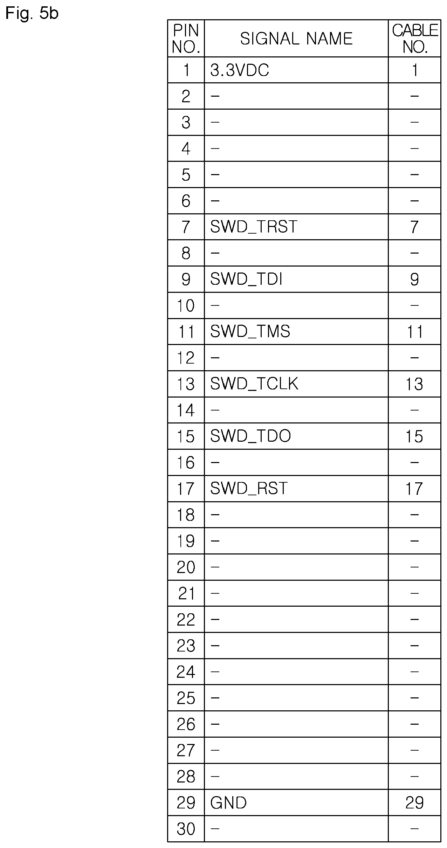

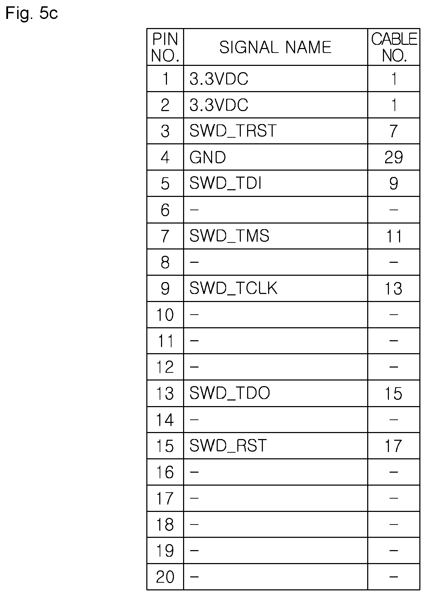

FIGS. 5A, 6A, 7A, 8A, 9A, and 10A illustrate concepts of connection between a connector and a target device according to an embodiment of the present disclosure. FIGS. 5B, 6B, 7B, 8B, 9B, and 10B illustrate examples of signals applied to connection elements of a connector according to an embodiment of the present disclosure. FIGS. 5C to 5D, 6C, 7C, 8C to 8F, 9C to 9D, and 10C illustrate examples of signals applied to connection elements of a connector of a target device according to an embodiment of the present disclosure.

In one embodiment, when a target device has two controller units (e.g., micro controller units (MCUs)) that require updating, the first connector 310 and connectors 515 and 525 of the target device may be connected using a single cable 500, as shown in FIG. 5A. That is, each of the connectors 515 and 525 of the target device may correspond to a respective MCU of the target device. Referring to FIG. 5A, the cable 500 includes a connector 505 corresponding to the first connector 310, connectors 510 and 520 corresponding to the connectors 515 and 525 of the target device, lines 502 connected to the connector 505, and lines 512 and 522 respectively connected to the connectors 515 and 525 of the target device.

The connector 510 may include connection elements corresponding to and electrically connected to connection elements of the connector 515. Each of the connection elements of the connector 510 may be connected to lines 512 for transmitting and receiving electrical signals. The connector 520 may include connection elements corresponding to and electrically connected to connection elements of the connector 525. Each of the connection elements of the connector 520 may be connected to the lines 522 for transmitting and receiving electrical signals. As shown in FIGS. 5B to 5D, pin numbers (PIN NO.) of the lines 502 and cable numbers (cable NO.) of the lines 512 and 522 may be electrically connected so as to correspond to each other.

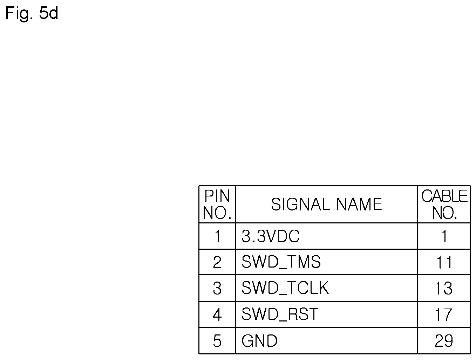

In one embodiment, in response to the first connector 310 being connected to the connector 515 and/or the connector 525 via the cable 500, the connection elements of the first connector 310 may be configured to perform functions shown in FIG. 5B. Pin numbers of FIG. 5B may correspond to the numbers shown in FIG. 4. Cable numbers in FIG. 5B may correspond to the lines 502. Pin numbers of FIG. 5C may correspond to respective connection elements of the connector 515. Cable numbers in FIG. 5C may correspond to pin numbers of the first connector 310. For example, a connection element of connector 515 may be electrically connected to a connection element of the first connector 310 corresponding to a cable number in FIG. 5C. Pin numbers of FIG. 5D may correspond to the respective connection elements of the connector 525. Cable numbers in FIG. 5D may correspond to pin numbers of the first connector 310. For example, a connection element of the connector 525 may be electrically connected to a connection element of the first connector 310 corresponding to a cable number in FIG. 5D.

As shown in FIGS. 5C and 5D, the connector 515 and the connector 525 have different interfaces, and accordingly, required protocols may be different. Referring to FIGS. 5A to 5D, connection elements of the first connector 310 may be electrically connected to the connector 515 and the connector 525 having different interfaces from each other to perform communication. Referring to FIG. 5B, pin numbers 1, 11, 13, 17, and 29 of the first connector 310 may be commonly connected to the connector 515 and the connector 525. That is, the connector 515 and the connector 525 may be connected using the cable 500 so as to share the pin numbers 1, 11, 13, 17, and 29 of the first connector 310.

In other words, in one embodiment, the connection elements of the first connector 310 may include a group of connection elements that may be shared with a plurality of connectors 515 and 525 having interfaces different from each other (e.g., here, pin numbers 1, 11, 13, 17, and 29), a group of connection elements that may be electrically connected to any one of the plurality of connectors 515 and 525 having interfaces different from each other (e.g., here, pin numbers 7, 9, and 15), and a group of unused connection elements (pin numbers corresponding to "-" in FIG. 5B).

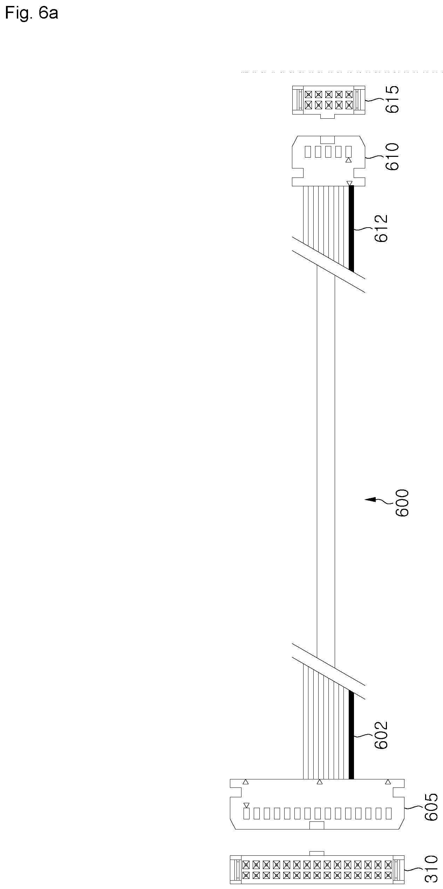

Referring to FIG. 6A, when a target device has one controller unit (e.g., a micro controller unit (MCU)) that requires updating, the first connector 310 and the connector 615 of the target device may be connected using a single cable 600, as shown in FIG. 6A. The cable 600 includes a connector 605 corresponding to the first connector 310, a connector 610 corresponding to a connector 615 of the target device, lines 602 connected to the connector 605, and lines 612 connected to the connector 615 of the target device.

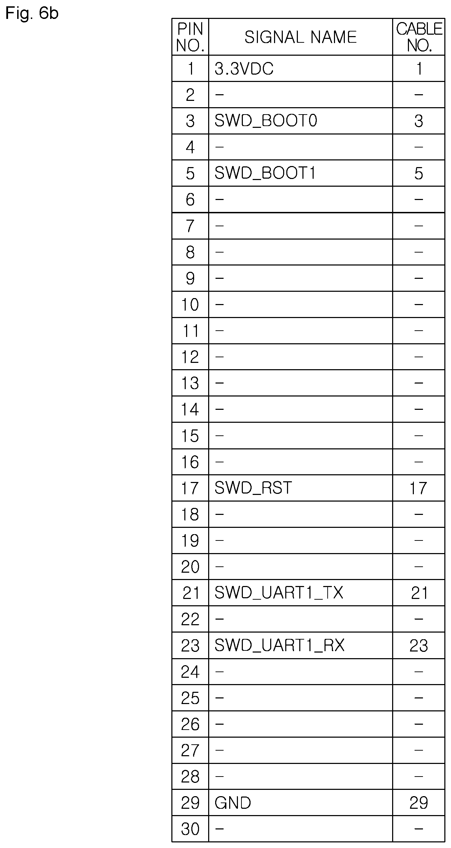

The connector 610 may include connection elements corresponding to and electrically connected to connection elements of the connector 615. Each of the connection elements of the connector 610 may be connected to the lines 612 for transmitting and receiving electrical signals. As shown in FIGS. 6B to 6C, pin numbers (PIN NO.) of the lines 602 and cable numbers (cable NO.) of the lines 612 may be electrically connected so as to correspond to each other.

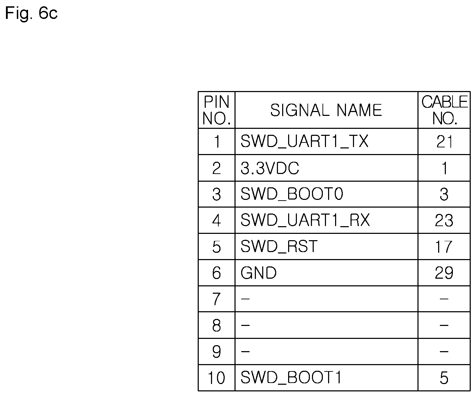

In one embodiment, in response to the first connector 310 being connected to the connector 615 via the cable 600, the connection elements of the first connector 310 may be configured to perform functions shown in FIG. 6B. Pin numbers of FIG. 6B may correspond to the numbers shown in FIG. 4. Cable numbers in FIG. 6B may correspond to the lines 602. Pin numbers in FIG. 6C may correspond to respective connection elements of the connector 615. Cable numbers in FIG. 6C may correspond to pin numbers of the first connector 310. For example, a connection element of the connector 615 may be electrically connected to a connection element of the first connector 310 corresponding to a cable number in FIG. 6C.

It will be understood that functions of the connection elements of the first connector 310 shown in FIG. 6B may be performed simultaneously with functions of the connection elements shown in FIG. 5B. That is, the first connector 310 may be connected to the connectors 515, 525, and 615 shown in FIGS. 5A and 6A simultaneously, individually, or sequentially with time differences. Accordingly, it will be understood that, when the update device according to the present disclosure is used, a plurality of MCUs may be updated, using the first connector 310, by connecting other connectors having different interfaces from each other simultaneously, individually, or sequentially with time differences.

For example, the connection elements of the first connector 310 may include connection elements shared with a plurality of connectors 515, 525, and 615 having different interfaces from each other, a group of connection elements that is electrically connected to any two of the plurality of connectors 515, 525, and 615 having interfaces different from each other, a group of connection elements that is electrically connected to any one of the plurality of connectors 515, 525, and 615 having interfaces different from each other, and a group of unused connection elements.

Referring to FIGS. 5B, 5D, and 6B to 6C, connection elements related to power (e.g., pin 1 and pin 29) and a reset signal connection element (e.g., pin 17) are shared. However, connection elements (e.g., pin 9, pin 15, pin 21, and pin 23) for transmitting and receiving data are not shared.

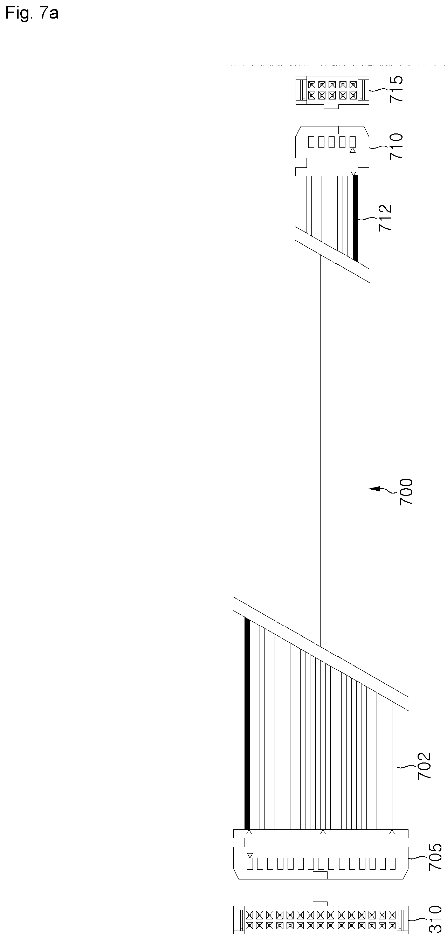

Referring to FIG. 7A, when a target device has one controller unit (e.g., a micro controller unit (MCU)) that requires updating, the first connector 310 and a connector 715 of the target device may be connected using a single cable 700 as shown in FIG. 7A. An interface of the connector 715 is different from that of the connector 615. The cable 700 includes a connector 705 corresponding to the first connector 310, a connector 710 corresponding to the connector 715 of the target device, lines 702 connected to the connector 705, and lines 712 connected to the connector 715 of the target device.

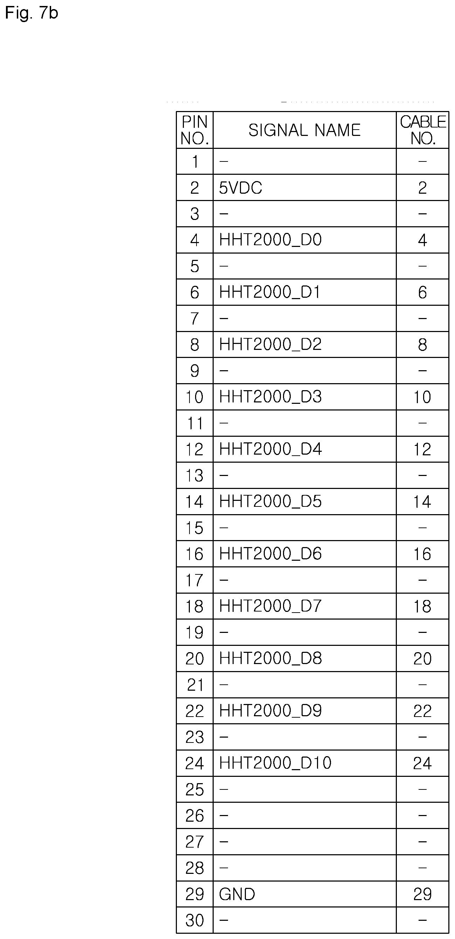

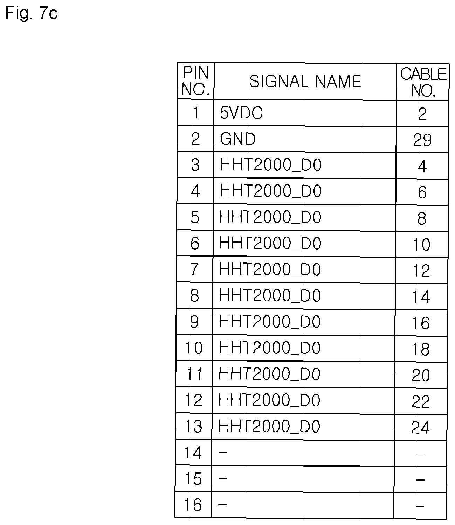

The connector 710 may include connection elements corresponding to and electrically connected to connection elements of connector 715. Each of the connection elements of the connector 710 may be connected to the lines 712 for transmitting and receiving electrical signals. As shown in FIGS. 7B and 7C, pin numbers (PIN NO.) of the lines 702 and cable numbers (cable NO.) of the lines 712 may be electrically connected so as to correspond to each other.

It will be understood that functions of the connection elements of the first connector 310 shown in FIG. 7B may be performed simultaneously with the functions of the connection elements shown in FIG. 5B and/or 6B. That is, the first connector 310 may be connected to the connectors 515, 525, 615, and 715 shown in FIGS. 5A, 6A, and 7A simultaneously, individually, or sequentially with time differences. Accordingly, it will be understood that, when the update device according to the present disclosure is used, a plurality of MCUs may be updated, using the first connector 310, by connecting other connectors having different interfaces from each other simultaneously, individually, or sequentially with time differences.

Referring to FIGS. 7A and 7B, the connector 715 is configured to use pin numbers 2, 4, 6, 8, 10, 12, 14, 16, 18, 20, 22, 24, and 29 of the first connector 310. Pin numbers 2, 4, 6, 8, 10, 12, 14, 16, 18, 20, 22, and 24 of the first connector 310 are not used for connection with the connectors 515, 525, and 615.

That is, in one embodiment, for example, the connection elements of the first connector 310 may include connection elements shared with a plurality of connectors 515, 525, and 615 having interfaces different from each other, connection elements electrically connected to any two of the plurality of connectors 515, 525, and 615 having interfaces different from each other, connection elements electrically connected to any one of a plurality of connectors 515, 525, 615, and 715 having interfaces different from each other, and unused connection elements. In addition, pin 29 for ground connection may be commonly used by the connectors 515, 525, 615, and 715.

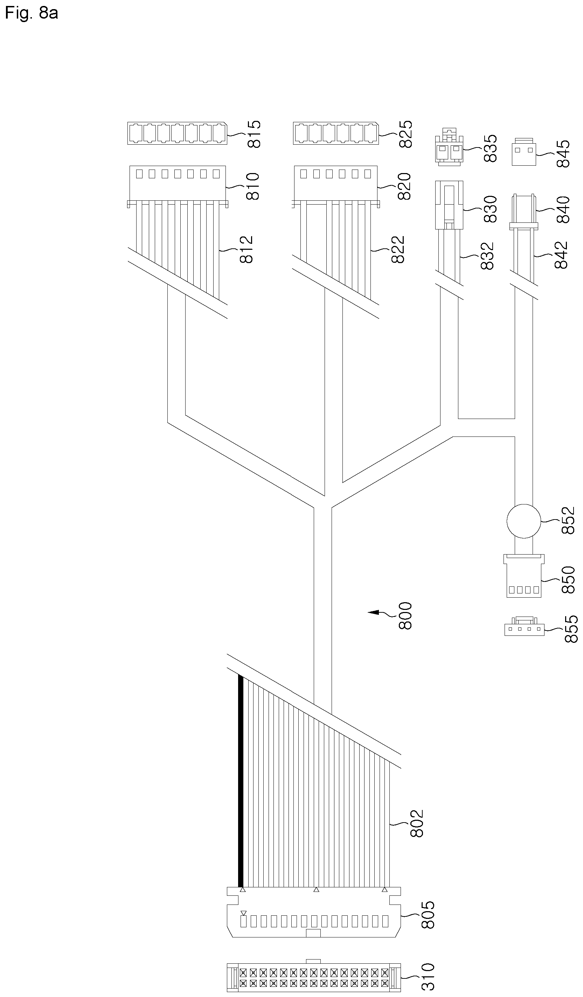

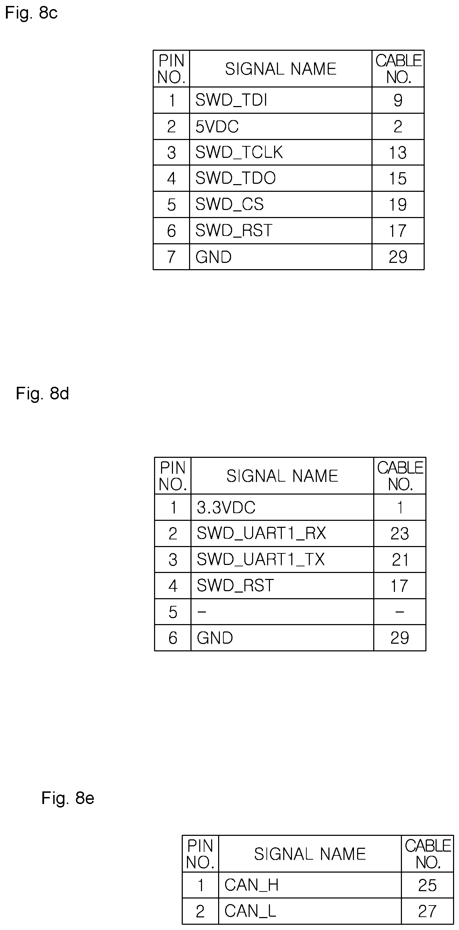

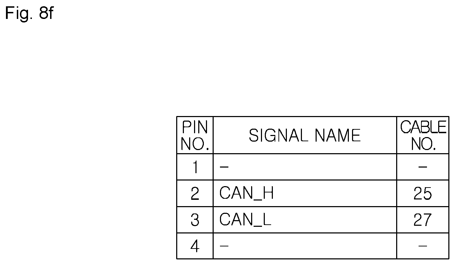

Referring to FIG. 8A, when a target device has five controller units (e.g., micro controller units (MCUs)) that require updating, as shown in FIG. 8A, the first connector 310 and five connectors 815, 825, 835, 845, and 855 of the target device may be connected using a single cable 800. Alternatively, when a target device has three controller units that require updating, the first connector 310 may be connected, using a single cable 800, to connectors 815 and 825 of the target device and any one of connectors 835, 845, and 855. Interfaces of the five connectors 815, 825, 835, 845, and 855 are different from each other and are also different from the interface of the connector 615. The connectors 835, 845, and 855 are connectors using a CAN protocol, and only interfaces thereof may be different.

Referring to FIGS. 8A to 8F, the connectors 835, 845, and 855 may all be connected to pins 25 and 27 of the first connector 310 using a CAN protocol. The connectors 815 and 825 may share some pins (e.g., pins 17 and 29) of the first connector 310.

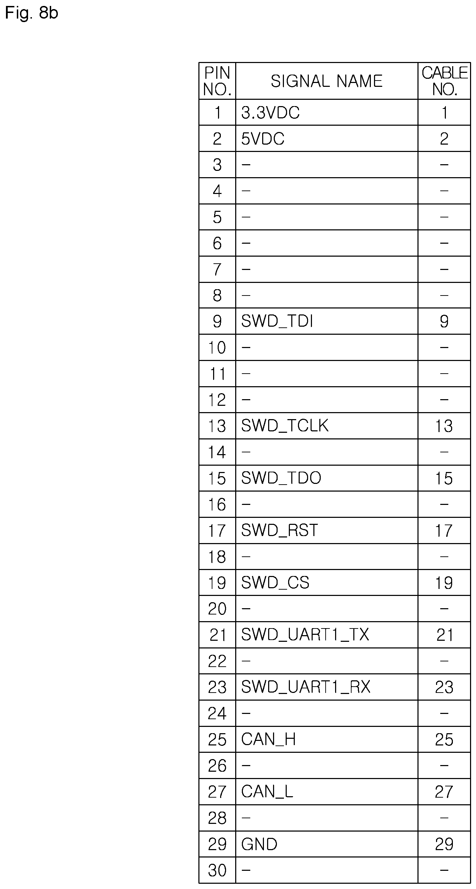

In one embodiment, it will be understood that functions of the connection elements of the first connector 310 shown in FIG. 8B may be performed simultaneously with the functions of the connection elements shown in FIGS. 5B, 6B, and/or 7B. That is, the first connector 310 may be connected to at least two of the connectors 515, 525, 615, 715, 815, 825, 835, 845, and 855 shown in FIGS. 5A, 6A, 7A, and 8A simultaneously, individually, or sequentially with time differences. Accordingly, it will be understood that, when the update device according to the present disclosure is used, a plurality of MCUs may be updated, using the first connector 310, by connecting other connectors having different interfaces simultaneously, individually, or sequentially with time differences.

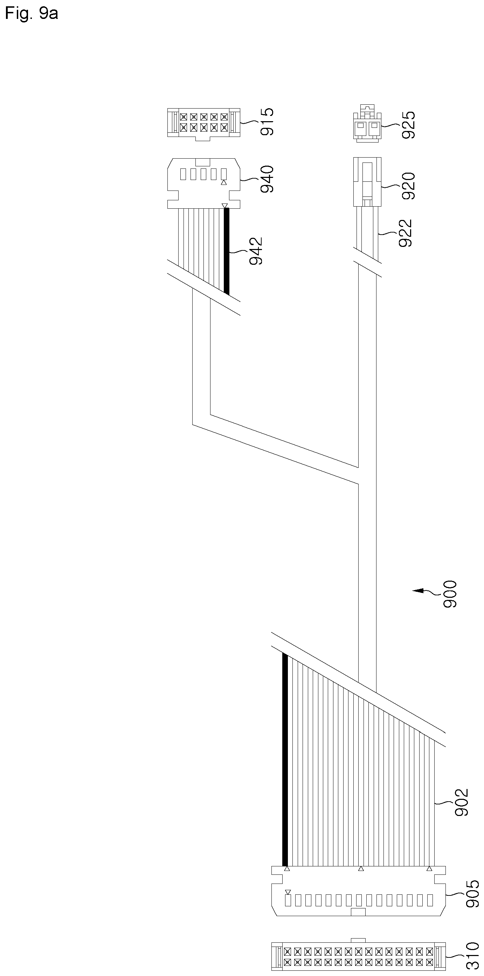

Referring to FIG. 9A, when a target device has two controller units (e.g., micro controller units (MCUs)) that require updating, the first connector 310 and the connectors 915 and 925 of the target device may be connected using a single cable 900, as shown in FIG. 9A. That is, each of the connectors 915 and 925 of the target device may correspond to a respective MCU of the target device. Referring to FIG. 9A, the cable 900 includes a connector 905 corresponding to the first connector 310, connectors 940 and 920 corresponding to the connectors 915 and 925 of the target device, lines 902 connected to the connector 905, and lines 942 and 922 respectively connected to the connectors 915 and 925 of the target device.

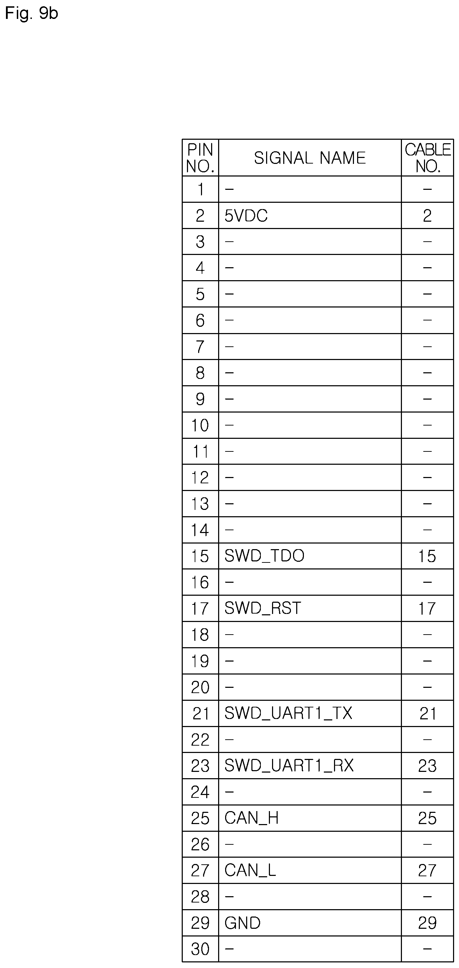

The connector 940 may include connection elements corresponding to and electrically connected to connection elements of connector 915. Each of the connection elements of the connector 940 may be connected to lines 942 for transmitting and receiving electrical signals. The connector 920 may include connection elements corresponding to and electrically connected to connection elements of the connector 925. Each of the connection elements of the connector 920 may be connected to the lines 922 for transmitting and receiving electrical signals. As shown in FIGS. 9B to 9D, pin numbers (PIN NO.) of the lines 902 and cable numbers (cable NO.) of the lines 942 and 922 may be electrically connected so as to correspond to each other.

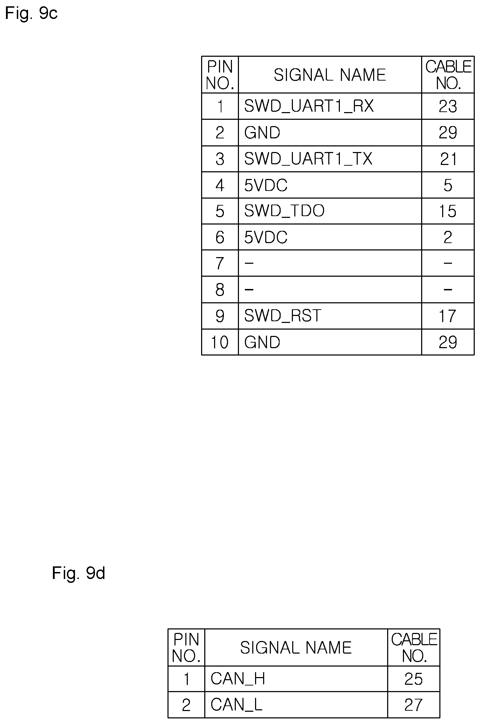

In an embodiment, in response to the first connector 310 being connected to the connector 915 and/or the connector 925 via the cable 900, connection elements of the first connector 310 may be configured to perform the functions shown in FIG. 9B. For example, a connection element of the connector 915 may be electrically connected to a connection element of the first connector 310 corresponding to a cable number in FIG. 9C. Pin numbers of FIG. 9D may correspond to respective connection elements of the connector 925. Cable numbers in FIG. 9D may correspond to pin numbers of the first connector 310. For example, a connection element of the connector 925 may be electrically connected to a connection element of the first connector 310 corresponding to a cable number in FIG. 9D.

As shown in FIGS. 9C and 9D, the connector 915 and the connector 925 have different interfaces, and accordingly, required protocols may be different. In one embodiment, the connector 915 and the connector 925 may not share pins of the first connector 310.

In one embodiment, arrangements of connection elements of the connectors 515, 525, 615, 715, 815, 825, 835, 845, 855, 915, and 925 shown in FIGS. 5A, 6A, 7A, 8A, and 9A may be combined. In addition, the connectors 515, 525, 615, 715, 815, 825, 835, 845, 855, 915, and 925 shown in FIGS. 5A, 6A, 7A, 8A, and 9A may be selectively installed in a target device. In any case, according to the arrangement of connection elements of the first connector 310 of the present disclosure, connectors having different interfaces may be connected simultaneously or sequentially.

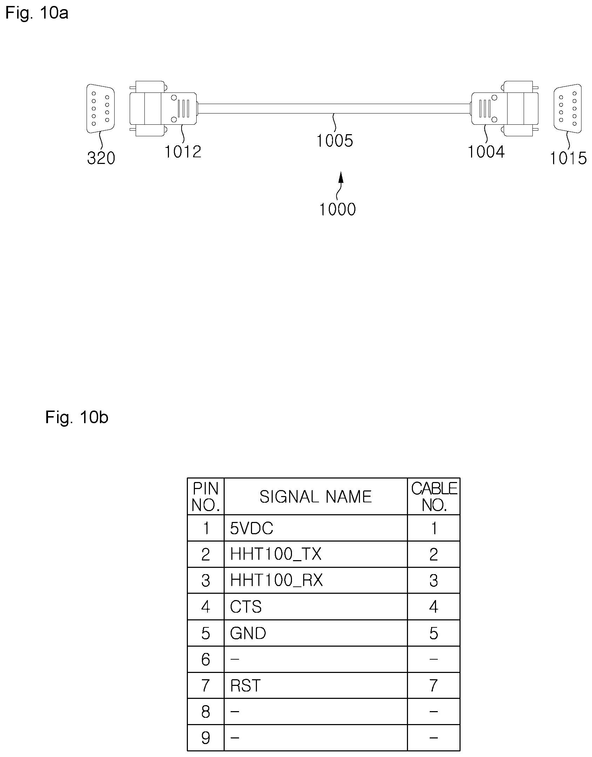

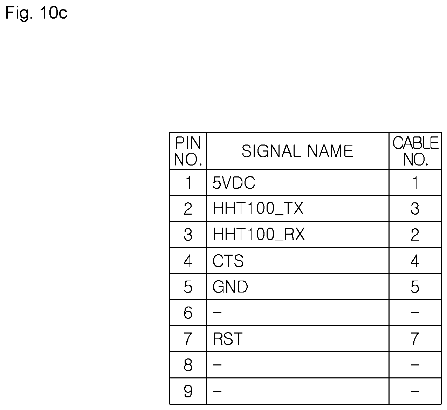

Referring to FIG. 10A, the second connector 320 may be connected to a connector 1015 of the target device using a cable 1000. The second connector 320 may have a standardized interface. For example, the second connector 320 may have a UART interface. The cable 1000 may have a connector 1012 corresponding to the second connector 320, a connector 1004 corresponding to the connector 1015, and a connection line 1005. Referring to FIGS. 10B and 10C, cable numbers in FIG. 10C may correspond to pin numbers of the second connector 320. As shown in FIGS. 10B and 10C, the second connector 320 and the connector 1015 may have the same interface.

Referring again to FIGS. 4 to 10c, the plurality of connection elements of the first connector 310 may include at least one connection element group among a first connection element group used for communicating with the target device via a first communication protocol and/or a first interface of the target device, a second connection element group used for communicating with the target device via a second communication protocol and/or a second interface of the target device, a third connection element group used for communicating with the target device via a third communication protocol and/or a third interface of the target device, and a fourth connection element group used for communicating with the target device via a fourth communication protocol and/or a fourth interface of the target device. In one embodiment, the first to fourth communication protocols may be different from each other. In one embodiment, the first to fourth interfaces may be different from each other.

In one embodiment, at least two of the first to fourth connection element groups may share connection elements included in each group. For example, at least one connection element of the first connection element group may belong to any one of the second to fourth connection element groups. For example, at least one connection element of the first connection element group (e.g., referred to as a shared connection element) may be electrically connected to the first interface and the second interface of the target device. That is, the shared connection element may be used for both the first communication protocol used for the first interface and the second communication protocol used for the second interface.

In one embodiment, any one connection element group may not share a connection element with another connection element group.

In one embodiment, even when the same communication protocol is used, interfaces of the target device may be different (see e.g., FIG. 8A).

In one embodiment, any one of first to the fourth interface may be an interface for connecting the update device to the target device to monitor the target device and configure the target device. For example, the target device may further comprise a display (not shown), and when connected to the first connector of the update device via any one of the first to fourth interfaces, a user may monitor the target device through the display and configure the target device. The plurality of connection elements may include a connection element group corresponding to any one of first to fourth interfaces.

In one embodiment, any one of first to fourth interface may be an interface for receiving authentication information of the target device and determining whether the target device is a valid terminal by connecting the update device to the target device. Accordingly, the plurality of connection elements may include a connection element group corresponding to any one of first to fourth interfaces.

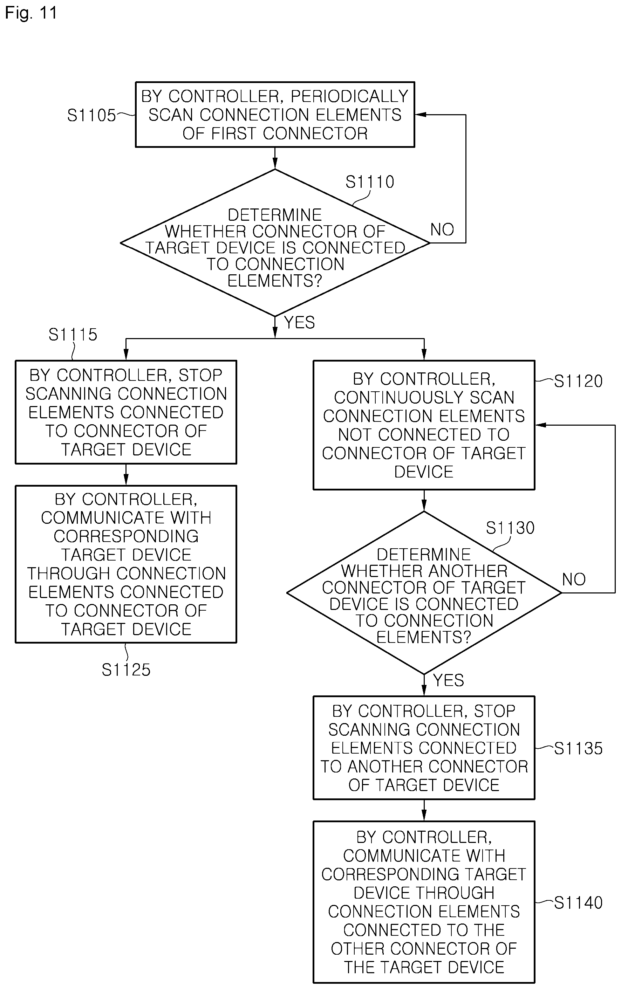

FIG. 11 is an example of a flowchart of a method of updating a program of a target device using an update device according to an embodiment of the present disclosure. It will be understood that the method shown in FIG. 11 may be performed not only by the update device described in the present disclosure but also by other update apparatuses. Hereinafter, only for convenience of understanding, description will be made with reference numerals assigned in the present disclosure.

Referring to FIG. 11, in block S1105, the controller 350 periodically scans connection elements of the first connector 310. The controller 350 may periodically scan the connection elements of the first connector 310 to detect whether the first connector 310 is connected to at least one of various connectors 515, 525, 615, 715, 815, 825, 835, 845, 855, 915, and 925 of the target device. In one embodiment, the first processor 352 or the second processor 354 may scan the connection elements of the first connector 310.

In one embodiment, scanning for pins related to power may not be performed.

In block S1110, the controller 350 determines whether at least one of the connectors 515, 525, 615, 715, 815, 825, 835, 845, 855, 915, and 925 of the target device is connected to the connection elements of the first connector 310. In response to determining that at least one of connectors 515, 525, 615, 715, 815, 825, 835, 845, 855, 915, and 925 of the target device is not connected to the connection elements of the first connector 310, the process returns to block S1105, and the controller 350 periodically scans the connection elements of the first connector 310. In response to determining that at least one of the connectors 515, 525, 615, 715, 815, 825, 835, 845, 855, 915, and 925 of the target device is connected to the connection elements of the first connector 310, the controller 350 performs block S1115 and block S1120.

In block S1115, the controller 350 stops scanning for connection elements connected to at least one of the connectors 515, 525, 615, 715, 815, 825, 835, 845, 855, 915, and 925 of the target device. In block S1120, the controller 350 continuously performs scanning, without stopping the scanning, for connection elements that are not connected to at least one of the connectors 515, 525, 615, 715, 815, 825, 835, 845, 855, 915, and 925 of the target device.

In block S1125, (following the above-described example), the controller 350 performs communication with a corresponding target device through connection elements connected to the connector 715 of the target device. In one embodiment, the controller 350 receives information of the target device via the connection element connected to the connector 715 of the target device and the cable 700. For example, a target device may include a plurality of MCUs and connectors corresponding to the respective MCUs. Accordingly, the information of the target device received by the controller 350 may mean information of the MCU corresponding to the connector 715 of the target device connected to the first connector 310.

For example, assuming that the first connector 310 is connected to the connector 715 of the target device, the information of the target device received by the controller 350 may include product information (e.g., a chip ID, a user ID, etc.) of an MCU corresponding to the connector 715, a communication scheme (e.g., a protocol, etc.) of the connector 715 connected to the first connector 310, and the like.

In one embodiment, controller 350 may receive the received information of the target device, for example, information required for updating the corresponding MCU based on product information of the MCU corresponding to the connector connected to first connector 310 from an external device. Alternatively, the controller 350 may prepare information required for updating based on information stored in the storage 330 of the update device 300. The controller 350 may update the corresponding MCU using product information (e.g., a communication protocol, etc.) of the MCU corresponding to the connector connected to the first connector 310.

In one embodiment, the communication performed in block S1125 may include communication for monitoring the target device and configuring the target device. In one embodiment, communication performed in block S1125 may include communication for receiving authentication information of the target device and determining whether the target device is a valid terminal by connecting the update device to the target device.

While block S1125 is performed, block S1120, block S1130, block S1135, and block S1140 may be performed in parallel.

In block S1120, the controller 350 continuously performs a scan for connection elements not connected to connectors of the target device. For example, in block S1110, assuming that the controller 350, while periodically scanning pins 1 to 30, detects that the first connector 310 is connected to the connector 715 of the target device, the controller 350 may stop scanning pin 4, pin 6, pin 8, pin 10, pin 12, pin 14, pin 16, pin 18, pin 20, pin 22, and pin 24, and may continue scanning the remaining pins in block S1120. In one embodiment, pins 2 and 29 are pins related to power, so that scanning may not be stopped. Alternatively, in an embodiment, pin 2 and pin 29, which are pins related to power, may not require separate scanning.

In block S1130, the controller 350 determines whether another connector of the target device is connected to the connection elements of the first connector 310. In response to determining that another connector of the target device is not connected to the connection element of the first connector 310, the process returns to block S1120, and the controller 350 periodically scans the connection elements of the first connector 310 that is not connected to the connectors of the target device. In response to determining that another connector of the target device is connected to the connection elements of the first connector 310, the controller 350 performs blocks S1135 and S1140. Although not shown in FIG. 11, it will be understood that the controller 350 periodically performs a scan for connection elements not connected to another connector, other than the connection element that is communicating with the target device in blocks S1125 and S1140, and in response to the connection elements of the target device being connected to the connection elements of the first connector, the MCU of the target device is updated by the controller 350.

For example, in block S1135, in response to detecting that the connection elements of the first connector and the connector 835 are connected, the controller 350 may stop scanning pin 25 and pin 27, and may continue scanning remaining pins (as described above, scanning of pin 2, pin 4, pin 6, pin 8, pin 10, pin 12, pin 14, pin 16, pin 18, pin 20, pin 22, pin 24, and pin 29 has already been stopped in block S1115).

In block S1140, (following the above-described example), the controller 350 communicates with a corresponding target device via the connection elements connected to the connector 835 of the target device. In one embodiment, the controller 350 receives information of the target device via the connection elements connected to the connector 835 of the target device and the cable 800. For example, a target device may include a plurality of MCUs and connectors corresponding to the respective MCUs. Accordingly, the information of the target device received by the controller 350 may indicate information of an MCU corresponding to the connector 835 of the target device connected to the first connector 310.

For example, the information of the target device received by the controller 350 may include product information (e.g., a chip ID, a user ID, etc.) of an MCU corresponding to the connector 835, a communication scheme (e.g., a protocol, etc.) of the connector 835 connected to the first connector 310, and the like.

In one embodiment, the controller 350 may receive the received information of the target device, for example, information required for updating the corresponding MCU based on product information of the MCU corresponding to the connector connected to the first connector 310 from an external device. Alternatively, the controller 350 may prepare information required for updating based on information stored in the storage 330 of the update device 300. The controller 350 may update the corresponding MCU using product information (e.g., a communication protocol, etc.) of the MCU corresponding to the connector connected to the first connector 310.

In one embodiment, the update device may receive data of the target device from the target device. For example, the update device may receive product information, program version information, and field information (e.g., address, elevator information, etc.) of the target device, and store the received information or transmit the same to an external device. Accordingly, the update device may update or restore information of an existing target device to a replaced target device using product information, program information, and field information of the target device, even when the target device at a site is replaced.

The methods according to the present disclosure may be implemented as processor-readable code stored in a processor-readable recording medium provided in a server, system, equipment, computer, integrated control unit, or the like used by a certain entity. The processor-readable recording medium may be any type of recording device in which data readable by a processor is stored. The processor-readable recording medium may include, for example, ROM, RAM, CD-ROM, a magnetic tape, a floppy disk, and an optical data storage device, and may also be implemented in the form of a carrier wave, such as transmission over the Internet. In addition, the processor-readable recording medium may be distributed over a computer system connected through a network such that processor-readable code is stored and executed in a distributed manner.

The devices and methods described above may be implemented by a hardware component, a software component, and/or a combination thereof. For example, the devices and components described in the embodiments may be implemented using one or more general-purpose computers or special-purpose computers, such as a processor, a controller 350, an arithmetic logic unit (ALU), a digital signal processor, a microcomputer, a field programmable array (FPA), a programmable logic unit (PLU), a microprocessor, or any other device capable of executing and responding to instructions. A processing device may execute an operating system (OS) and one or more software applications executable on the operating system. In addition, the processing device may also access, store, manipulate, process, and generate data in response to execution of software. For convenience of understanding, the processing device is described as utilizing a single processing element, but a person having ordinary skill in the art will appreciate that the processing device may include a plurality of processing elements and/or a plurality of types of processing elements. For example, the processing device may include a plurality of processors, or one processor and one controller 350. Further, other processing configurations, such as a parallel processor, are also possible.

The software may include computer programs, code, instructions, or one or more combinations thereof, and may configure the processing device to operate as desired, or may independently or collectively instruct the processing device. The software and/or data may be permanently or temporarily embodied in any type of machine, component, physical device, virtual equipment, computer storage medium or device, or a transmitted signal wave, for being interpreted by the processing device or for providing instructions or data to the processing device. The software may also be distributed over the computer system connected through the network and may be stored or executed in a distributed manner. The software and the data may be stored in one or more computer-readable recording media.

The described embodiments of the present disclosure may also be practiced in a distributed computing environment in which certain tasks are performed by remote processing devices connected through a communication network. In the distributed computing environment, program modules may be located in both local and remote memory storage devices.

Although the embodiments have been described with reference to limited drawings as described above, those skilled in the art may apply various technical modifications and variations based on the above. For example, even when the described techniques are performed in an order different from that described, and/or components of the described systems, structures, devices, circuits, and the like are combined or assembled in forms different from those described, or are replaced or substituted by other components or equivalents, appropriate results may be achieved.

Therefore, other implementations, other embodiments, and equivalents to the appended claims fall within the scope of the following claims.

## Claims

1. A universal update device comprising:
a storage configured to store a program for updating a target device and at least one communication protocol used by the target device;
a first connector configured to be connected to a connector of the target device via a cable, the first connector including a plurality of connection elements, the plurality of connection elements including a first connection element group configured to be connected to a first interface of the target device and a second connection element group configured to be connected to a second interface of the target device different from the first interface, the first connection element group and the second connection element group sharing at least one connection element; and
a controller configured to periodically scan the first connector, wherein the controller is configured to, in response to detecting that the first connector is connected to the first interface or the second interface, receive information of a microcontroller unit corresponding to the connected first or second interface, and update the microcontroller unit based on the information.

2. The universal update device of claim 1, further comprising a second connector configured to be connected to a connector interface different from the first and second interfaces, wherein the controller is configured to periodically scan the second connector while periodically scanning the first connector, in response to detecting that the second connector is connected to the connector interface, receive information of a microcontroller unit corresponding to the connected connector interface, and update the microcontroller unit based on the information.

3. The universal update device of claim 1, wherein the plurality of connection elements further comprises a third connection element group that does not share any connection element with the first and second connection element groups.

4. The universal update device of claim 3, wherein the third connection element group is configured to monitor the target device and configure the target device.

5. The universal update device of claim 3, wherein the third connection element group is configured to connect to the target device, receive authentication information of the target device, and determine whether the target device is a valid terminal.

6. The universal update device of claim 3, wherein the controller is configured to:
update a microcontroller unit corresponding to the first interface in response to the first connection element group being connected to the first interface; and
update a microcontroller unit corresponding to the interface in response to the third connection element group being connected to the corresponding interface.

7. The universal update device of claim 1, wherein the first connection element group and the second connection element group are connection elements for using different protocols from each other.

8. The universal update device of claim 1, wherein the first connection element group and the second connection element group are connection elements for using the same protocol.

9. The universal update device of claim 1, wherein the controller is configured to:
update a microcontroller unit corresponding to the first interface in response to the first connection element group being connected to the first interface; and
update a microcontroller unit corresponding to the second interface in response to the second connection element group being connected to the second interface.

10. A method of updating a microcontroller unit included in a target device, the method comprising:
periodically scanning, by a controller, a first connector of the update device, the first connector including a plurality of connection elements, the plurality of connection elements including a first connection element group configured to be connected to a first interface of a target device and a second connection element group configured to be connected to a second interface of the target device different from the first interface, the first connection element group and the second connection element group sharing at least one connection element;
detecting, by the controller, that the first connection element group is electrically connected to the first interface;
stopping, by the controller, scanning of the first connection element group in response to the detecting;
continuously performing, by the controller, scanning of the second connection element group; and
updating, by the controller, a microcontroller unit corresponding to the first interface through the first connection element group.

11. The method of claim 10, further comprising:
detecting, by the controller, that the second connection element group is electrically connected to the second interface after the continuously performing of the scanning of the second connection element group;
stopping, by the controller, scanning of the second connection element group in response to the detecting; and
updating, by the controller, a microcontroller unit corresponding to the second interface through the second connection element group.

12. The method of claim 10, wherein the updating of the microcontroller unit corresponding to the first interface comprises:
receiving information of the microcontroller unit through the first interface; and
automatically updating the microcontroller unit based on the information.

13. A method of updating a microcontroller unit included in a target device, the method comprising:
periodically scanning, by a controller, a first connector of the update device, the first connector including a plurality of connection elements, the plurality of connection elements including a first connection element group configured to be connected to a first interface of a target device and a second connection element group configured to be connected to a second interface of the target device different from the first interface, the first connection element group and the second connection element group sharing at least one connection element;
detecting, by the controller, that the first connection element group is electrically connected to the first interface;
stopping, by the controller, scanning of the first connection element group in response to the detecting;
continuously performing, by the controller, scanning of the second connection element group; and
providing, by the controller, a user interface that allows monitoring of the target device and configuration of the target device through the first connection element group.

14. The method of claim 13, further comprising:
detecting, by the controller, that the second connection element group is electrically connected to the second interface after the continuously performing of the scanning of the second connection element group;
stopping, by the controller, scanning of the second connection element group in response to the detecting; and
updating, by the controller, a microcontroller unit corresponding to the second interface through the second connection element group.
